# EUROPÄISCHE PATENTSCHRIFT

(11) **EP 2 096 922 B1**
(45) Veröffentlichungstag und Bekanntmachung des Hinweises auf die Patenterteilung: **04.04.2012**
(21) Anmeldenummer: 07822418.5
(22) Anmeldetag: 09.11.2007
(51) Int. Cl.: A01N 43/80

(54) **VERFAHREN ZUR BEKÄMPFUNG VON SCHADGRÄSERN MIT EINER HERBIZID WIRKSAMEN ZUSAMMENSETZUNG, ENTHALTEND EIN EINWERTIGES SALZ VON 4-[2-METHYL-3-(4,5-DIHYDROISOXAZOL-3-YL)-4-METHYLSULFONYL-BENZOYL]-1-METHYL-5-HYDROXY-1H-PYRAZOL.**
PROCESS FOR CONTROLLING WEEDS WITH AN HERBICIDALLY ACTIVE COMPOSITION CONTAINING A MONOVALENT SALT OF 4-[2-METHYL-3-(4,5-DIHYDROISOXAZOL-3-YL)-4-METHYLSULFONYLBENZOYL]-1-METHYL-5-HYDROXY-1H-PYRAZOLE.
PROCEDE DE LUTTE CONTRE LES MAUVAISES HERBES AVEC UNE COMPOSITION HERBICIDE CONTENANT UN SEL MONOVALENT DE 4-[2-MÉTHYL-3-(4,5-DIHYDROISOXAZOL-3-YL)-4-MÉTHYLSULFONYLBENZOYL]-1-MÉTHYL-5-HYDROXY-1H-PYRAZOLE

(30) Priorität: 27.11.2006 EP 06124814
(43) Veröffentlichungstag der Anmeldung: 09.09.2009
(73) Patentinhaber: BASF SE, 67056 Ludwigshafen (DE)
(72) Erfinder: KRAPP, Michael, 67122 Altrip (DE); BERGHAUS, Rainer, 67346 Speyer (DE); BECKER, Markus, 67149 Meckenheim (DE); KOLB, Klaus, 67105 Schifferstadt (DE); SIEVERNICH, Bernd, 67454 Hassloch (DE)
(86) Internationale Anmeldenummer: PCT/EP2007/062125
(87) Internationale Veröffentlichungsnummer: WO 2008/064988

(56) Entgegenhaltungen:
- WO-A-00/53014
- WO-A-99/63823

## Beschreibung

Die vorliegende Erfindung betrifft ein Verfahren zur Bekämpfung von Schadgräsern mittels Anwendung von lagerstabilen, sedimentationsfreien, herbizid wirksamen Zusammensetzungen enthaltend ein einwertiges Salz von 4-[2-Methyl-3-(4,5-dihydroisoxazol-3-yl)-4-methylsulfonyl-benzoyl]-1-methyl-5-hydroxy-1H-pyrazol.

Generell ist das gleichmäßige Aufbringen herbizider Wirkstoffe insbesondere auf großen Anbauflächen eine notwendige Voraussetzung für wirksame, umweltgerechte Unkrautbekämpfung. Dieses wird beispielsweise durch die Anwendung flüssiger Zusammensetzungen im Spritztank gewährleistet.

3-Heterocyclyl-substituierte Benzoylderivate sind bekannt. Vertreter dieser Verbindungsklasse und deren herbizide Wirkung werden beispielsweise in WO 96/26206, WO 00/53014 und WO 98/31681 beschrieben. Aus der WO 99/63823 sind herbizide Mischungen aus 4-[2-Chlor-3-(4,5-dihydroisoxazol-3-yl)-4-methylsulfonyl-benzoyl]-1-methyl-5-hydroxy-1H-pyrazol, stickstoffhaltigem Dünger und einem Adjuvant bekannt.

Aufgabe der vorliegenden Erfindung war es, ein Verfahren zur Bekämpfung von Schadgräsern zu finden, das sich auf eine Zusammensetzung von 4-[2-Methyl-3-(4,5-dihydroisoxazol-3-yl)-4-methylsulfonyl-benzoyl]-1-methyl-5-hydroxy-1H-pyrazol stützt. Darüber hinaus soll die erfindungsgemäß anzuwendende Zusammensetzung lagerstabil und sedimentationsfrei sein und sich für eine Anwendung beispielsweise im Spritztank eignen. Aus der erfindungsgemäß anzuwendenden Zusammensetzung soll gegebenenfalls durch Verdünnen mit Wasser oder Puffer eine anwendungsbereite Spritzbrühe hergestellt werden. Für das effiziente Spritzen großer Anbauflächen soll die erfindungsgemäß anzuwendende Zusammensetzung zweckmäßigerweise in großen Gebinden verwendet werden können. Darüber hinaus soll das erfindungsgemäße Verfahren ohne weitere Hilfsstoffe eine bessere herbizide Wirksamkeit aufweisen als beispielsweise Suspensionskonzentrate des freien Wirkstoffs.

Diese Aufgabe konnte gelöst werden indem man ein Verfahren zur Bekämpfung von Schadgräsern zur Verfügung stellt, gemäß dem man eine Zusammensetzung, enthaltend
a) die Verbindung der Formel I, 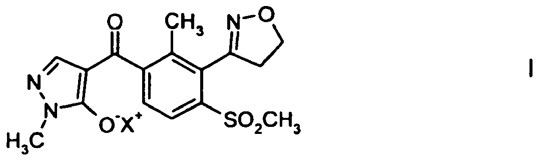 wobei X ein einwertiges Kation ist, ausgewählt aus der Gruppe von Alkalimetall- und Ammoniumionen, und
b) Wasser, dadurch gekennzeichnet, dass die Verbindung der Formel I in Wasser gelöst vorliegt, auf die Pflanzen und/oder deren Lebensraum einwirken lässt.

Der Anwender, beispielsweise der Landwirt, verdünnt die Zusammensetzung für das erfindungsgemäße Verfahren gegebenenfalls mit Wasser und/oder Puffer und setzt gegebenenfalls weitere Hilfs- oder Zusatzstoffe zu und erhält so die anwendungsbereite Spritzbrühe.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Geeignete einwertige Kationen in den Verbindungen der Formel I sind Alkalimetall- oder Ammoniumionen. Gegenstand der vorliegenden Erfindung sind somit die Verwendung von Zusammensetzungen für das erfindungsgemäße Verfahren, die die Verbindung der Formel I enthalten, wobei X für Alkalimetallionen wie Li⁺, Na⁺ oder K⁺ steht. Gemäß einer Ausgestaltungsform der Zusammensetzung bedeutet X in den Verbindungen der Formel I Li⁺.

Gemäß einer anderen Ausgestaltungsform der Zusammensetzung bedeutet X in den Verbindungen der Formel 1 Na⁺.

Gemäß einer weiteren Ausgestaltungsform der Zusammensetzung bedeutet X in den Verbindungen der Formel I K⁺.

Gegenstand der vorliegenden Erfindung ist auch die Verwendung solcher Zusammensetzungen, die die Verbindung der Formel I mit X in der Bedeutung von NR¹R²R³R⁴⁺ enthalten, wobei R¹, R², R³, R⁴ unabhängig voneinander Wasserstoff, C₁-C₄-Alkyl oder 2-(2-Hydroxy-eth-1-oxy)eth-1-yl bedeuten.

Gemäß einer Ausgestaltungsform der Erfindung bedeutet X in den Verbindungen der Formel I Ammonium.

Gemäß einer weiteren Ausgestaltungsform der Erfindung bedeutet X in den Verbindungen der Formel I Isopropylammonium.

Gemäß einer weiteren Ausgestaltungsform der Erfindung bedeutet X in den Verbindungen der Formel I 2-(2-Hydroxy-eth-1-oxy)eth-1-ylammonium.

Bevorzugt werden Zusammensetzungen, enthaltend die Verbindung der Formel I, in denen X NH₄⁺, Na⁺, K⁺ oder Li⁺ bedeutet, verwendet.

Besonders bevorzugt werden Zusammensetzungen, enthaltend die Verbindung der Formel I, in denen X NH₄⁺, Na⁺ oder K⁺ bedeutet, verwendet.

Außerordentlich bevorzugt werden Zusammensetzungen, enthaltend die Verbindung der Formel I, in denen X NH₄⁺ oder Na⁺ bedeutet, verwendet.

Insbesondere bevorzugt werden Zusammensetzungen, enthaltend die Verbindung der Formel I, in denen X Na⁺ bedeutet, verwendet.

Es versteht sich von selbst, dass auch Mischungen von Verbindungen der Formel I, die sich jeweils durch ein geeignetes einwertiges Kation voneinander unterscheiden, in der Zusammensetzung verwendet werden können, die dem erfindungsgemäßen Verfahren zugrunde liegen. Die Anzahl der verschiedenen Salze und ihr Mischungsverhältnis sind hierbei variabel.

Der Anwender, beispielsweise der Landwirt, bringt üblicherweise 50 bis 500 Liter der eingangs definierten, anwendungsbereiten Spritzbrühe pro Hektar landwirtschaftlicher Nutzfläche auf, bevorzugt 100 bis 400 Liter.

Die Aufwandmenge an Komponente a) der Zusammensetzung des erfindungsgemäßen Verfahrens beträgt üblicherweise von 2,5 bis 100 g/Hektar, bevorzugt von 5 bis 75 g/Hektar. Insbesondere bevorzugt werden Aufwandmengen von 5 bis 25 g/Hektar. Das entspricht bei einem üblichen Spritzbrühenvolumen von 50 bis 500 Litern pro Hektar einer Anwendungskonzentration der Komponente a) im Bereich von 0.005 [g/l_{Spritzbrühe}] bis 2 [g/l_{Spritzbrühe}].

In einer Ausgestaltungsform des erfindungsgemäßen Verfahrens werden für den ,preplant burn down' -die Vernichtung unerwünschten Pflanzenwuchses vor der Aussaat der Kulturpflanzen-, 5 bis 50 g/Hektar der Komponente a) der Zusammensetzung verwendet; in einer weiteren Ausgestaltungsform für den Nachauflauf sind 5 bis 50 g, bevorzugt 5 bis 25 g der Komponente a) in 50 bis 500 Litern Spritzbrühe für eine Fläche von einem Hektar enthalten.

Die Zusammensetzung des erfindungsgemäßen Verfahrens enthält die Verbindung der Formel I in Wasser als Komponente b) gelöst in einer Konzentration von 0.005 [g/l] bis 500 [g/l].

In einer bevorzugten Ausführungsform enthält die Zusammensetzung die Verbindung der Formel I in Wasser als Komponente b) in einer Konzentration von 1 [g/l] bis 400 [g/l] gelöst. Besonders bevorzugt sind Konzentrationen von 10 [g/l] bis 300 [g/l].

Die Zusammensetzung des efindungsgemäßen Verfahrens kann die Komponenten a) und b) alleine enthalten. Sie kann aber auch ein oder mehrere weitere Komponenten enthalten.

Beispielsweise kann die Zusammensetzung des efindungsgemäßen Verfahrens einen Dünger c), insbesondere einen stickstoffhaltigen Dünger, enthalten.

Geeignete stickstoffhaltige Dünger c) sind beispielsweise wässrige Ammnoniaklösung, Ammoniumsalze, Harnstoff und Thioharnstoff sowie deren Gemische.

Als Dünger geeignete Ammoniumsalze sind beispielsweise Ammoniumnitrat, Ammoniumsulfat, Amnmoniumhydrogensulfat, Ammoniumchlorid, Ammoniumacetat, Ammoniumformiat, Ammoniumoxalat, Ammoniumcarbonat, Ammoniumhydrogencarbonat, Ammoniumnitrat, Ammoniumthiosulfat, Ammoniumphosphat, Ammoniumhydrogendiphosphat, Ammoniumdihydrogenmonophosphat, Ammoniumnatriumhydrogenphosphat, Ammoniumthiocyanat.

Bevorzugte stickstoffhaltige Dünger c) sind:

Harnstoff, Ammoniumnitat, Ammoniumnitrat-Harnstoff, Ammoniumsulfat, Ammoniumphosphat, Ammoniumhydrogendiphosphat, Ammoniumdihydrogenmonophosphat und Ammoniumnatriumhydrogenphosphat.

Ganz besonders bevorzugt sind:

Harnstoff oder Ammoniumnitrat und deren Mischung, beispielsweise als Lösung. Die Ammoniumnitrat-Harnstofflösungen haben bevorzugt einen Gesamtstickstoffgehalt von 27 - 33 % (w/w) und werden beispielsweise unter dem Markennamen Ensol^{®} von der BASF vermarktet.

Die Zusammensetzung des erfindungsgemäßen Verfahrens enthält gemäß einer Ausführungsform stickstoffhaltigen Dünger (Komponente c)) in einer Menge, so dass die vom Anwender, beispielsweise dem Landwirt, daraus hergestellte Spritzbrühe eine Endkonzentration von 0,5 bis 5 w/w% beispielsweise von Harnstoff-Ammoniumnitrat aufweist.

Beispielsweise können 2,5 I einer 20 bis 60 w/w%-igen Hamstoff-Ammoniumnitrat haltigen Lösung in eine Dosiervorrichtung gegeben werden, um 100 I der anwendungsbereiten Spritzbrühe herzustellen.

Bevorzugt enthält die anwendungsbereite Spritzbrühe eine Endkonzentration von 1,5 bis 3,0 w/w-%, besonders bevorzugt von 2,5 w/w % Dünger.

In einer besonders bevorzugten Ausführungsform enthält die anwendungsbereite Spritzbrühe bei einem üblichen Spritzbrühenvolumen von 50 bis 500 Litern pro Hektar 0,5 bis 5 w/w% der Komponente c) und die Komponente a) in einer Menge, sodass 2,5 bis 100 g des Wirkstoffes pro Hektar aufgebracht werden.

Demzufolge enthält die Zusammensetzung beziehungsweise die daraus hergestellte anwendungsbereite Spritzbrühe die Komponenten a) und c) üblicherweise in einem Verhältnis von 1:2,5 bis 1:10000.

Bevorzugt wird ein Mischungsverhältnis der Komponenten a) und c) von 1:12,5 bis 1:5000.

In einer besonders bevorzugten Ausführungsform liegen die Komponenten a) und c) in der anwendungsbereiten Spritzbrühe in einem Verhältnis von 1:33 bis 1:2000 vor.

Als weitere Komponente d) kann die Zusammensetzung des efindungsgemäßen Verfahrens Adjuvants enthalten.

Geeignete Adjuvants d) sind beispielsweise Pflanzenöle, die teilhydriert und hydriert sein können, modifizierte Pflanzenöle, Mineralöle, Alkoholalkoxylate, Alkoholethoxylate, alkylierte EO(Ethylenoxid)/PO(Propylenoxid)-Blockcopolymere, Alkylphenolethoxylate, Polyole, EO/PO-Blockcopolymere, Organosiliconverbindungen, Alkylglycoside, Alkylpolyglycoside, Alkylsulfate, sulfatierte Alkoholalkoxylate, Alkylarylsulfonate, Alkylsulfonate, Dialkylsulfosuccinate, phospatierte Alkoholalkoxylate, Fettaminalkoxylate, Ester, Carboxylate, Esterethoxylate, Dialkyladipate, Dicarbonsäurederivate wie sog. Alkenyl succinic anhydride condensates mit Polyalkylenoxiden oder Polyhydroxyaminen, Dialkylphtalate, ethoxylierte Sorbitanester natürlicher und ethoxylierte Glyceride natürlicher Fettsäuren.

Bevorzugte Adjuvants d) sind

Alkoholalkoxylate wie Alkylether von EO/PO-Copolymeren, z.B. Plurafac^{®} (BASF AG), Synperionic^{®} LF (ICI), Alkoholethoxylate, wobei der Alkohol ein C₈-C₁₈-Alkohol synthetischer oder natürlicher Herkunft ist, der sowohl linear als auch verzweigt sein kann. Der Ethoxylat-Teil enthält je nach verwendetem Alkohol durchschnittlich 3-20 Mol Ethylenoxid. Beispielhaft verwendete Produkte sind Lutensol^{®} ON, TO, AO und A der Firma BASF, Alkylarylsulfonate wie Nonylphenolethoxylate mit 5-15 Mol EO, Polyole wie Polyethylenglykol oder Polypropylenglycol, EO/PO-Blockcopolymere wie Pluronic® PE (BASF AG) oder Synperionic^{®} PE (ICI), Organosiliconverbindungen, Alkylpolyglycodside wie Agrimul^{®} (Henkel KGA), AG 6202 (Akzo-Nobel) Atplus^{®} 450 (ICI) oder Lutensol^{®} GD 70 (BASF AG), Fettaminalkoxylate wie Ethomeen^{®} und Armobleem^{®} der Firma Akzo Nobel, Ester natürlicher und synthetischer Fettsäuren wie Methyloleate oder Methyl-cocoate, Dialkyladipate, ethoxylierte Sorbitanester natürlicher Fettsäuren, wie Tween^{®} der Firma ICI Surfactants (Tween^{®} 20, Tweeno 85, Tween^{®} 80), ethoxylierte Glyceride natürlicher Fettsäuren, wie Glycerox^{®} der Firma Croda.

Besonders bevorzugt wird MSO (methylated seed oil) als Komponente d) in der Zusammensetzung verwendet.

Weitere Beispiele finden sich in:
McCutcheon's; Emulsifiers and Detergents,
Volume 1: Emulsifiers and Detergents 1994
North American Edition;
McCutcheon's Division, Glen Rock NJ, USA,

McCutcheon's; Emulsifiers and Detergents,
Volume 2: Emulsifiers and Detergents 1994
International Edition;
McCutcheon Division, Glen Rock NJ, USA,

Surfactants in Europe;
A Directory of surface active agents available in Europe
2nd Ed. 1989;
Terg Data, Darlington, England,

Ash, Michael;
Handbook of cosmetic and personal care additives 1994;
Gower Publishing Ltd, Aldershot, England

Ash, Michael;
Handbook of industrial Surfactants
1993;
Gower Publishing Ltd. Aldershot, England.

In der Zusammensetzung des erfindungsgemäßen Verfahrens ist die Komponente d) üblicherweise in einer Menge enthalten, so dass die vom Anwender, beispielsweise dem Landwirt, hergestellte Spritzbrühe eine Endkonzentration von 0,5 bis 2,5 Vol% an Adjuvant aufweist.

Bevorzugt enthält die anwendungsbereite Spritzbrühe eine Endkonzentration von 1,0 bis 1,5 Vol-%, besonders bevorzugt von 1,25 Vol% eines geeigneten Adjuvants.

Die Angabe Vol-% bezieht sich auf das Gesamtvolumen beispielsweise der anwendungsbereiten Spritzbrühe.

In einer besonders bevorzugten Ausführungsform enthält die anwendungsbereite Spritzbrühe bei einem üblichen Spritzbrühenvolumen von 50 bis 500 Litern pro Hektar 1,0 bis 1,5 Vol% der Komponente d) und die Komponente a) in einer Menge, sodass 2,5 bis 100 g des Wirkstoffes pro Hektar aufgebracht werden.

Demzufolge enthält die Zusammensetzung des erfindungsgemäßen Verfahrens beziehungsweise die anwendungsbereite Spritzbrühe bei einem Spritzbrühenvolumen von 50 bis 500 Litern pro Hektar die Komponenten a) und d) üblicherweise in einem Verhältnis (w/w) von 1:2,5 bis 1:5000.

Bevorzugt wird ein Mischungsverhältnis (w/w) der Komponenten a) und d) von 1:5 bis 1:3000.

In einer besonders bevorzugten Ausführungsform liegen die Komponenten a) und d) in der anwendungsbereiten Spritzbrühe in einem Verhältnis (w/w) von 1:6 bis 1:1500 vor.

Weiterhin kann die Zusammensetzung des erfindungsgemäßen Verfahrens ein oder mehrere Herbizide (Komponente e)), beispielsweise aus der Gruppe der E1: Acetyl-CoA-Carboxylase-Inhibitoren (ACC), E2: Acetolactatsynthase-Inhibitoren (ALS), E3: Amide, E4: Auxin-Herbizide, E5: Auxin-Transport-Hemmer, E6: Carotinoid-Biosynthese-Inhibitoren, E7: Enolpyruvyl-Shikimat-3-phosphat-Synthase-Inhibitoren (EPSPS), E8: Glutamin-Synthetase-Inhibitoren, E9: Lipidbiosynthese-Inhibitoren, E10: Mitose-Inhibitoren, E11: Protoporphyrinogen-IX-Oxidase-Inhibitoren, E12: Photosynthese-Inhibitoren, E13: Synergisten, E14: Wuchsstoffe, E15: Zellwandbiosynthese-Inhibitoren, sowie E16: verschiedene weitere Herbizide enthalten.

Als Komponente e) können aus der Gruppe der Acetyl-CoA-Carboxylase-Inhibitoren (E1, ACC) beispielsweise Cyclohexenonoximether, Phenoxyphenoxypropionsäureester verwendet werden. Zu den Acetolactatsynthase-Inhibitoren (E2, ALS) zählen unter anderem Imidazolinone, Pyrimidylether, Triazolopyrimidine oder Sulfonylharnstoffe. Bei den Auxin-Herbiziden (E4) sind unter anderem Pyridincarbonsäuren, 2,4-D oder Benazolin von Relevanz. Als Lipidbiosynthese-Inhibitoren (E9) werden unter anderem Anilide, Chloracetanilide, Thioharnstoffe, Benfuresate oder Perfluidone verwendet. Bei den Mitose-Inhibitoren (E10) kommen unter anderem Carbamate, Dinitroaniline, Pyridine, Butamifos, Chlorthal-dimethyl (DCPA) oder Maleinsäure hydrazid in Betracht. Beispiele für Protoporphyrinogen-IX-Oxidase-Inhibitoren (E11) sind unter anderem Diphenylether, Oxadiazole, cyclische Imide oder Pyrazole. Als Photosynthese-Inhibitoren (E12) kommen unter anderem Propanil, Pyridat, Pyridafol, Benzothiadiazinone, Dinitrophenole, Dipyridylene, Harnstoffe. Phenole, Chloridazon, Triazin, Triazinon, Uracile oder Biscarbamate in Betracht. Zu den Synergisten (E13) zählen unter anderem Oxirane. Wuchsstoffe (E14) sind beispielsweise Aryloxyalkansäure, Benzoesäuren oder Chinolincarbonsäuren. Unter der Gruppe "verschiedene weitere Herbizide" (E16) sind unter anderem die Wirkstoffklassen Arylaminopropionsäuren, Dichlorpropionsäuren, Dihydrobenzofurane, Phenylessigsäuren sowie einzelne, wie unten angegebene, Herbizide zu verstehen, deren Wirkmechanismus nicht (genau) bekannt ist.

Herbizide e), die gemäß der vorliegenden Erfindung verwendet werden können, sind zum Beispiel u.a.:
E1 Acetyl-CoA-Carboxylase-Inhibitoren (ACC), z.B.
   - Cyclohexenonoximether, wie Alloxydim, Clethodim, Cloproxydim, Cycloxydim, Sethoxydim, Tralkoxydim, Butroxydim, Clefoxydim (=profoxydim) oder Tepraloxydim;
   - Phenoxyphenoxypropionsäureester, wie Clodinafop-propargyl, Cyhalofop-butyl, Diclofop-methyl, Fenoxaprop-ethyl, Fenoxaprop-P-ethyl, Fenthia-propethyl, Fluazifop-butyl, Fluazifop-P-butyl, Haloxyfop-ethoxyethyl, Haloxyfop-methyl, Haloxyfop-P-methyl, Isoxapyrifop, Metamifop, Propaquizafop, Quizalofop-ethyl, Quizalofop-P-ethyl oder Quizalofop-tefuryl; oder
   - Keto-Enole, wie Pinoxaden;
E2 Acetolactatsynthase-Inhibitoren (ALS), z.B.
   - Imidazolinone, wie Imazapyr, Imazaquin, Imazamethabenzmethyl (Imazam), I-mazamox, Imazapic, Imazethapyr oder Imazamethapyr;
   - Pyrimidylether, wie Pyrithiobacsäure, Pyrithiobac-Natrium, Bispyribac-Natrium, Pyriminobac-methyl, Pyriftalid oder Pyribenzoxym;
   - Triazolopyrimidine, wie Florasulam, Flumetsulam, Metosulam oder Penoxsulam, Diclosulam, Cloransulam-methyl;
   - Sulfonylharnstoffe, wie Amidosulfuron, Azimsulfuron, Bensulfuron-methyl, Chlorimuron-ethyl, Chlorsulfuron, Cinosulfuron, Cyclosulfamuron, Ethametsulfuronmethyl, Ethoxysulfuron, Flazasulfuron, Flucetosulfuron, Flupyrsulfuron-methyl-Na, Foramsulfuron, Halosulfuron-methyl, Imazosulfuron, Mesosulfuron. Metsulfuron-methyl, Nicosulfuron, Orthosulfamuron, Oxasulfuron, Primisulfuron-methyl, Prosulfuron, Pyrazosulfuron-ethyl, Rimsulfuron, Sulfometuron-methyl, Thifensulfuron-methyl, Triasulfuron, Tribenuron-methyl, Triflusulfuron-methyl, Trifloxysulfuron, Tritosulforon, Sulfosulfuron oder lodosulfuron;
   - Sulfonylaminocarbonyltriazolinone, wie Thiencarbazon, Flucarbazon oder Propoxycarbazon-Na; oder
   - Sulfonanilide, wie Pyrimisulfan;
E3 Amide, z.B.
   - Allidochlor (CDAA), Benzoylprop-ethyl, Bromobutid, Chlorthiamid, Diphenamid, Etobenzanid (Benzchlomet), Fluthiamid, Fosamin oder Monalid;
E4 Auxin-Herbizide, z.B.
   - Pyridincarbonsäuren, wie Aminopyralid, Fluroxypyr, Triclopyr, Clopyralid oder Picloram; oder
   - 2,4-D oder Benazolin;
E5 Auxin-Transport-Hemmer, z.B.
   - Naptalam oder Diflufenzopyr;
E6 Carotinoid-Biosynthese-Inhibitoren, z.B.
   - Beflubutamid, Benzofenap, Clomazon (Dimethazon), Diflufenican, Fluorochloridon, Fluridon, Pyrasulfutol, Pyrazolynat, Pyrazoxyfen, Isoxaflutol, Isoxachlortol, Mesotrion, Sulcotrion (Chlormesulon), Tefuryltrion, Tembotrion, Ketospiradox, Flurtamon, Norflurazon, Amitrol, Picolinafen, Benzobicyclon oder CAS-Nr.:352010-68-5;
E7 Enolpyruvyl-Shikimat-3-phosphat-Synthase-Inhibitoren (EPSPS) z.B.
   - Glyphosat oder Sulfosat;
E8 Glutamin-Synthetase-Inhibitoren, z.B.
   - Bilanafos (Bialaphos) oder Glufosinat-Ammonium;
E9 Lipidbiosynthese-Inhibitoren, z.B.
   - Anilide, wie Anilofos;
   - Chloracetanilide, wie Dimethenamid, S-Dimethenamid, Acetochlor, Alachlor, Butachlor, Butenachlor, Diethatyl-ethyl, Dimethachlor, Metazachlor, Metolachlor, S-Metolachlor, Pethoxamid, Pretilachlor, Propachlor, Prynachlor, Terbuchlor, Thenylchlor oder Xylachlor;
   - Acetamide wie Diphenamid, Napropamide und Naproanilide;
   - Oxyacetamide wie Flufenacet oder Mefenacet;
   - Thiocarbamate, wie Butylat, Cycloat, Diallat, Dimepiperat, EPTC, Esprocarb, Molinat, Orbencarb, Pebulat, Prosulfocarb, Thiobencarb (Benthiocarb), Thiocarbazil, Triallat oder Vemolat; oder
   - Tetrazolinone wie Fentrazamide;
   - Isoxazoline wie Pyroxasulfon (KIH-485);
   - Benfuresat, Ethofumesate, Cafenstrole oder Perfluidon;
E10 Mitose-Inhibitoren, z.B.
   - Carbamate, wie Asulam, Carbetamid, Chlorpropham, Pronamid (Propyzamid), Propham;
   - Dinitroaniline, wie Benefin (=benfluralin), Butralin, Dinitramin, Ethalfluralin, Fluchloralin, Oryzalin, Pendimethalin, Prodiamin oder Trifluralin;
   - Pyridine, wie Dithiopyr oder Thiazopyr; oder
   - Butamifos, Chlorthal-dimethyl (DCPA) oder Maleinsäure-hydrazid;
E11 Protoporphyrinogen-IX-Oxidase-Inhibitoren, z.B.
   - Diphenylether, wie Acifluorfen, Acifluorfen-Natrium, Aclonifen, Bifenox, Chlornitrofen (CNP), Ethoxyfen, Fluorodifen, Fluoroglycofen-ethyl, Fomesafen, Furyloxyfen, Lactofen, Nitrofen, Nitrofluorfen oder Oxyfluorfen;
   - Oxadiazole, wie Oxadiargyl oder Oxadiazon:
   - cyclische Imide, wie Azafenidin, Butafenacil, Carfentrazon-ethyl, Cinidon-ethyl, Flumiclorac-pentyl, Flumioxazin, Flumipropyn, Flupropacil, Fluthiacet-methyl, Sulfentrazon oder Thidiazimin;
   - Pyrazole, wie Pyraflufen-ethyl (ET-751), Fluazolate (JV 485) oder Nipyraclofen;
   - Pyridazinone, wie Flufenpyr-ethyl; oder
   - Triazolone, wie Benzcarbazon;
E12 Photosynthese-Inhibitoren, z.B.
   - Propanil, Pyridat oder Pyridafol;
   - Benzothiadiazinone, wie Bentazon;
   - Dinitrophenole, wie Bromofenoxim, Dinoseb, Dinoseb-acetat, Dinoterb oder DNOC;
   - Dipyridylene, wie Cyperquat-chlorid, Difenzoquat-methylsulfat, Diquat oder Paraquat-dichlorid;
   - Harnstoffe, wie Chlorbromuron, Chlortoluron, Difenoxuron, Dimefuron, Diuron, Ethidimuron, Fenuron, Fluometuron, Isoproturon, Isouron, Linuron, Methabenzthiazuron, Methazol, Metobenzuron, Metoxuron, Monolinuron, Neburon, Siduron oder Tebuthiuron;
   - Phenole, wie Bromoxynil oder loxynil;
   - Chloridazon;
   - Triazine, wie Ametryn, Atrazin, Cyanazin, Desmetryn, Dimethamethryn, Hexazinon, Prometon, Prometryn, Propazin, Simazin, Simetryn, Terbumeton, Terbutryn, Terbutylazin oder Trietazin;
   - Triazinone, wie Metamitron oder Metribuzin;
   - Uracile, wie Bromacil, Lenacil oder Terbacil; oder
   - Biscarbamate, wie Desmedipham oder Phenmedipham;
   - Triazolinone wie Amicarbazon;
E13 Synergisten, z.B.
   - Oxirane, wie Tridiphan;
E14 Wuchsstoffe, z.B.
   - Aryloxyalkansäuren, wie z.B. 2,4-DB, Clomeprop, Dichlorprop, Dichlorprop-P (2,4-DP-P), MCPA, MCPB, Mecoprop, Mecoprop-P ;
   - Benzoesäuren, wie Chloramben oder Dicamba; oder
   - Chinolincarbonsäuren, wie Quinclorac oder Quinmerac;
E15 Zellwandsynthese-Inhibitoren, z.B.
   - Isoxaben, Flupoxam oder Dichlobenil;
E16 verschiedene weitere Herbizide, z.B.
   - Dichlorpropionsäuren, wie Dalapon;
   - Phenylessigsäuren, wie Chlorfenac (Fenac);
   - Arylaminopropionsäuren, wie Flamprop-methyl oder Flamprop-isopropyl; oder
   - Aziprotryn, Barban, Bensulid, Benzthiazuron, Benzofluor, Buminafos, Buthidazol, Buturon, , Chlorbufam, Chlorfenprop-methyl, Chlorxuron, Cinmethylin, Cumyluron, Cycluron, Cyprazin, Cyprazol, Dibenzyluron, Dipropetryn, Dymron, Eglinazinethyl, Endothall, Ethiozin, Fluorbentranil, , Isocarbamid, Isopropalin, Karbutilat, Mefluidid, Monuron, Napropamid, Napropanilid, Nitralin, Oxaciclomefon, Phenisopham, Piperophos, Procyazin, Profluralin, Pyributicarb, Secbumeton, Sulfallat (CDEC), Terbucarb, Triaziflam, Triazofenamid oder Trimeturon;

Die Zuordnung der Wirkstoffe zu den jeweiligen Wirkmechanismen basiert auf dem momentanen Kenntnisstand. Falls für einen Wirkstoff mehrere Wirkmechanismen zum Tragen kommen, so wurde dieser Stoff nur einem Wirkmodus zugeordnet.

Nach einer Ausführungsform sind als Komponente e) der Zusammensetzung des erfindungsgemäßen Verfahrens Triazine besonders bevorzugt, darunter insbesondere Atrazin oder Tertbutylazin.

In einer weiteren Ausführungsform ist als Komponente e) der Zusammensetzung des erfindungsgemäßen Verfahrens die Kombination aus Triazinen und Chloracetaniliden, insbesondere aus Atrazin und Dimethenamid oder S-Dimethenamid bevorzugt.

Ebenfalls außerordentlich bevorzugt als Komponente e) der Zusammensetzung des erfindungsgemäßen Verfahrens ist die Kombination aus Triazinen und Sulfonylharnstoffen, insbesondere aus Atrazin und Nicosulfuron.

Das Gewichtsverhältnis von Komponente a) und jedem als Komponente e) in der Zusammensetzung des erfindungsgemäßen Verfahrens verwendeten weiteren Herbizids liegt vorzugsweise im Bereich von 1:0,001 bis 1:1000, vorzugsweise von 1:0,01 bis 1:200, besonders bevorzugt von 1:0,01 bis 1:100.

Weiterhin kann die Mischung des erfindungsgemäßen Verfahrens als Komponente f) einen Safener enthalten.

Als Safener f) eignen sich Substanzen wie Benoxacor, Cloquintocet, Cyometrinil, Dichlormid, Dicyclonon, Dietholat, Fenchchlorazol, Fenclorim, Flurazol, Fluxofenim, Furilazol, Isoxadifen, Mefenpyr, Mephenat, Naphtalic anhydrid, 2,2,5-Trimethyl-3-(dichloroacetyl)-1,3-oxazolidin (R-29148), 4-(Dichloroacetyl)-1-oxa-4-azaspiro[4.5]decan (AD-67, MON 4660), N-[[4-[(Cyclopropylamino)carbonyl]phenyl]sulfonyl]-2-methoxybenzamide II (CAS no. 221667-31-8, Cyprosulfamid) sowie Oxabetrinil.

In einer Ausgestaltungsform der Erfindung werden folgende Safener besonders bevorzugt: Benoxacor, Cloquintocet, Dichlormid, Fenchchlorazol, Fenclorim, Fluxofenim, Furilazol, Isoxadifen, Mefenpyr, AD-67 und Oxabetrinil.

Die Herbizide e) aus den Gruppen E1 bis E16 und die Komponenten f) können gegebenenfalls auch in Form ihrer umweltverträglichen Salze, Ester und Amide vorliegen. Geeignete Salze sind im allgemeinen die Salze von denjenigen Kationen bzw. die Säureadditionssalze von denjenigen Säuren, deren Kationen bzw. Anionen die Herbizidwirkung der Wirkstoffe nicht negativ beeinflussen.

Geeignete Kationen sind insbesondere Ionen der Alkalimetalle, vorzugsweise Lithium, Natrium und Kalium, der Erdalkalimetalle, vorzugsweise Calcium und Magnesium, und der Übergangsmetalle, vorzugsweise Mangan, Kupfer, Zink und Eisen, sowie Ammonium, wobei es in diesem Fall gewünschtenfalls möglich ist, dass ein bis vier Wasserstoffatome durch C₁-C₄-Alkyl, Hydroxy-C₁-C₄-alkyl, C₁-C₄-Alkoxy-C₁-C₄-alkyl, Hydroxy-C₁-C₄-alkoxy-C₁-C₄-alkyl, Phenyl oder Benzyl ersetzt werden, vorzugsweise Ammonium, Isopropylammonium, Dimethylammonium, Diisopropylammonium, Tetramethylammonium, Tetrabutylammonium, 2-(2-Hydroxyeth-1-oxy)eth-1-ylammonium, Di(2-hydroxyeth-1-yl)ammonium, Trimethylbenzylammonium, weiterhin Phosphoniumionen, Sulfoniumionen, vorzugsweise Tri(C₁-C₄-alkyl)sulfonium, und Sulfoxoniumionen, vorzugsweise Tri(C₁-C₄-alkyl)sulfoxonium.

Anionen von geeigneten Säureadditionssalzen sind in erster Linie Chlorid, Bromid, Fluorid, Hydrogensulfat, Sulfat, Dihydrogenphosphat, Hydrogenphosphat, Nitrat, Hydrogencarbonat, Carbonat, Hexafluorsilicat, Hexafluorphosphat, Benzoat sowie die Anionen der C₁-C₄-Alkansäuren, vorzugsweise Format, Acetat, Propionat und Butyrat.

Geeignete Ester sind Alkyl-, Alkoxyalkyl-, Allyl-, Propargyl- und Oxetan-3-ylester, bevorzugt C₁-C₁₀-Ester, zum Beispiel Methyl-, Ethyl-, Propyl-, Isopropyl-, Butyl-, Isobutyl-, Pentyl-, Mexyl-(=1-methyl-hexyl) oder Isoctyl-(=2-ethyl-hexyl) ester, C₁-C₄-Alkoxyethyl-ester, zum Beispiel Methoxyethyl-, Ethoxyethyl- oder Butoxyethyl-ester, Allylester, Proparyglester und Oxetan-3-ylester.

Geeignete Amide sind unsubstituierte Amide, Alkyl- und Dialkyl-amide sowie Anilide, bevorzugt C₁-C₄-Alkyl-amide, zum Beispiel Methyl- oder Ethyl-amide, Di(C₁-C₄-alkyl)-amide, zum Beispiel Dimethyl- oder Diethyl -amide, oder Anilide, bevorzugt das unsubstituierte Anilid oder 2-Chloro-anilid.

Die Komponenten e) und f) und/oder ihre Salze, Ester, Amide und Hydrate können in der Zusammensetzung des erfindungsgemäßen Verfahrens gegebenenfalls als reine Enantiomere vorliegen, ebenso als Racemate oder Diastereomerengemische oder als Tautomere.

Die Komponenten a) bis e) können einzeln, bereits teilweise oder vollständig miteinander gemischt oder als Bestandteil eines Kombinationsmittels zur Herstellung der Zusammensetzung des erfindungsgemäßen Verfahrens verwendet werden.

Der Anwender, beispielsweise der Landwirt, verwendet die Zusammensetzung des erfindungsgemäßen Verfahrens, beziehungsweise die anwendungsbereite Spritzbrühe, üblicherweise für die Anwendung in einer Vordosiereinrichtung, in einer Rückenspritze, im Spritztank oder im Sprühflugzeug.

Gemäß einer Ausführungsform der Erfindung wird die Zusammensetzung des erfindungsgemäßen Verfahrens mit Wasser und/oder Puffer auf die gewünschte Anwendungskonzentration gebracht, wobei gegebenenfalls weitere Hilfs- und Zusatzmittel zugegeben werden.

Nach einer anderen Ausführungsform kann der Anwender die einzelnen Komponenten der Zusammensetzung des erfindungsgemäßen Verfahrens selber im Spritztank mischen, mit Wasser und/oder Puffer auf die gewünschte Anwendungskonzentration bringen und gegebenenfalls weitere Hilfs- und Zusatzmittel zugeben (Tankmixverfahren).

In einer weiteren Ausführungsform kann der Anwender sowohl einzelne Komponenten der Zusammensetzung des erfindungsgemäßen Verfahrens als auch teilweise vorgemischte Komponenten, beispielsweise a) und c) oder a) und e) im Spritztank mischen, mit Wasser (b)) und/oder Puffer auf die gewünschte Anwendungskonzentration bringen und gegebenenfalls weitere Hilfs- und Zusatzmittel zugeben (Tankmixverfahren).

In einer erfindungsgemäßen Ausführungsform kann die Komponente a) als unformulierter Wirkstoff zur Herstellung der erfindungsgemäßen Zusammensetzung verwendet werden. Gemäß einer anderen erfindungsgemäßen Ausführungsform liegt die Komponente a) als beispielsweise mit Hilfsstoffen formulierter Wirkstoff vor. Gemäß einer weiteren Ausführungsform wird die Komponente a) in situ durch Reaktion der Verbindung der Formel I-H 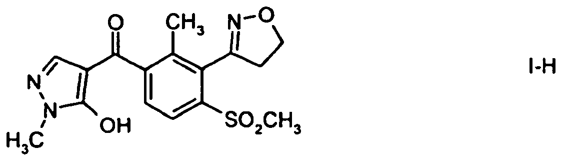 mit einer geeigneten Base, wie beispielsweise NaOH, KOH oder NH₄OH hergestellt.

Die Komponenten e) und/oder gegebenenfalls f) der Zusammensetzung des erfindungsgemäßen Verfahrens können zu deren Herstellung ebenfalls mit Hilfsstoffen formuliert verwendet werden.

Die Zusammensetzung des erfindungsgemäßen Verfahrens kann beispielsweise in Form von direkt versprühbaren wäßrigen Lösungen oder Dispersionen, auch hochprozentigen wäßrigen, öligen oder sonstigen Suspensionen oder Emulsionen durch Berieseln, Versprühen, Vernebeln oder Gießen angewendet werden. Die Anwendungsformen richten sich nach den Verwendungszwecken; sie sollten in jedem Fall möglichst die feinste Verteilung der herbiziden Mischung des erfindungsgemäßen Verfahrens gewährleisten.

Wässrige Anwendungsformen der Zusammensetzung des erfindungsgemäßen Verfahrens können aus Emulsionskonzentraten, Suspensionen, Pasten, netzbaren Pulvern oder wasserdispergierbaren Granulaten hergestellt werden. Zur Herstellung von Emulsionen, Pasten oder Öldispersionen können die Komponenten als solche oder in einem Öl oder Lösungsmittel gelöst, mittels Netz-, Haft-, Dispergier- oder Emulgiermittel in Wasser homogenisiert werden. Es können aber auch aus den Komponenten, Netz-, Haft-, Dispergier- oder Emulgiermittel und eventuell Lösungsmittel oder Öl bestehende Konzentrate hergestellt werden, die zur Verdünnung mit Wasser geeignet sind.

Pulver-, Streu- und Stäubemittel können beispielsweise durch Mischen oder gemeinsames Vermahlen der Komponente a), gegebenenfalls Dünger c) gegebenenfalls weiteren Herbiziden e) und gegebenenfalls Safener f) mit einem festen Trägerstoff hergestellt werden.

Granulate, beispielsweise Umhüllungs-, Imprägnierungs- und Homogengranulate können durch Bindung der Komponente a), gegebenenfalls Dünger c) gegebenenfalls weiteren Herbiziden e) und gegebenenfalls Safener f) an feste Trägerstoffe hergestellt werden.

Generell kommen für die Formulierung der einzelnen Komponenten der Zusammensetzung des erfindungsgemäßen Verfahrens selbst beziehungsweise zur Herstellung der anwendungsbereiten Spritzbrühe, als Hilfs- und Zusatzstoffe beispielsweise in Betracht:

Inerte Zusatz - oder Trägerstoffe wie Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphtaline oder deren Derivate, alkylierte Benzole oder deren Derivate, Alkohole wie Methanol, Ethanol, Propanol, Butanol, Cyclohexanol, Ketone wie Cyclohexanon oder stark polare Lösungsmittel, z.B. Amine wie N-Methylpyrrolidon oder Wasser.

Geeignete Adjuvants sind beispielsweise die als Komponente d) beschriebenen Verbindungen.

Puffer oder Pufferlösungen sind Lösungen, die ihren pH-Wert bei Zusatz starker Säuren oder Basen kaum ändern. Pufferlösungen bestehen meist aus einer schwachen Säure, beispielsweise Essigsäure, und einem ihrer Salze, beispielsweise Natriumacetat.

Zur besseren Verarbeitung können weitere Hilfs- und Zusatzstoffe zugegeben werden. Dabei haben sich folgende Komponenten bewährt: weitere Lösungsmittel, Entschäumer, Puffersubstanzen, Verdicker, Spreitmittel, kompatibilitätsfördernde Mittel, flüssige und feste Träger, Tenside.

Feste Träger sind beispielsweise Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Als oberflächenaktive Stoffe (Tenside) kommen die Alkali-, Erdalkali-, Ammoniumsalze von aromatischen Sulfonsäuren, z.B. Lignin-, Phenol-, Naphthalin- und Dibutylnaphthalinsulfonsäure sowie von Fettsäuren, Alkyl- und Alkylarylsulfonaten, Alkyl-, Laurylether und Fettalkoholsulfaten, sowie Salze sulfatierter Hexa-, Hepta- und Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäure mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylen- oder Polyoxyproylennalkylether, Laurylalkoholpolyglykoletheracetat, Sorbitester, Lignin-Sulfitablaugen oder Methylcellulose in Betracht.

Beispiele hierfür werden in Farm Chemicals Handbook 1997; Meister Publishing 1997 S. CI0 "adjuvant" oder 1998 Weed Control Manual S. 86 beschrieben.

Gemäß dem erfindungsgemäßen Verfahrens kann Pflanzenwuchs auf Nichtkulturflächen sehr gut bekämpft werden, besonders bei hohen Aufwandmengen. In Kulturen wie Weizen, Reis, Mais, Soja und Baumwolle wirkt sie gegen Schadgräser, ohne die Kulturpflanzen nennenswert zu schädigen. Dieser Effekt tritt vor allem bei niedrigen Aufwandmengen auf.

Schadgräser, die erfindungsgemäß bekämpft werden können, sind beispielsweise Aegilops cylindrica, Alopecurus myosuroides, Agrostis stolonifera, Agropyron repens, Apera spica-venti, Avena fatua, Avena ludoviciana, Avena sterilis, Brachiaria brizantha, Brachiaria plantaginea, Brachiaria platyphylla, Brachiaria decumbens, Bromus arvensis, Bromus inermis, Bromus mollis, Bromus secalinus, Bromus sterilis, Bromus tectorum, Cenchrus echinatus, Cenchrus incertus, Cynodon dactylon, Dactyloctenium aegyptium, Digitaria adscendens, Digitaria ciliaris, Digitaria horizontalis, Digitaris ischaemum, Digitaria sanguinalis, Echinochloa colonum, Echinochloa crus-galli, Echinochloa crus-pavonis, Echinochloa spp., Eleusine indica, Eriochloa gracilis, Eriochloa villosa, Imperata cylindria, Ischaemum rugosum, Leptochloa chinensis, Leptochloa fascicularis, Leptochloa filiformis, Lolium multiflorum, Lolium perenne, Lolium rigidum, Lolium temulentum, Panicum capillare, Panicum dichotomiflorum, Panicum maximum, Panicum miliaceum, Panicum repens, Panicum texanum, Phalaris brachystachys, Phalaris canariensis, Phalaris minor, Poa annua, Poa trivialis, Roettboellia exaltata, Setaria faberi, Setaria italica, Setaria lutescens (=glauca), Setaria verticilliata, Setaria viridis, Setaria spec., Sorghum bicolor, Sorghum halepense.

Bevorzugt werden mit der Zusammensetzung des erfindungsgemäßen Verfahrens Avena fatua, Avena ludoviciana, Avena sterilis, Brachiaria brizantha, Brachiaria plantaginea, Brachiaria platyphylla, Brachiaria decumbens, Cenchrus echinatus, Cenchrus incertus, Cynodon dactylon, Dactyloctenium aegyptium, Digitaria adscendens, Digitaria ciliaris, Digitaria horizontalis, Digitaris ischaemum, Digitaria sanguinalis, Echinochloa colonum, Echinochloa crus-galli, Echinochloa crus-pavonis, Echinochloa spp., Eleusine indica, Eriochloa gracilis, Eriochloa villosa, Imperata cylindria, Ischaemum rugosum, Leptochloa chinensis, Leptochloa fascicularis, Leptochloa filiformis, Panicum capillare, Panicum dichotomiflorum, Panicum maximum, Panicum miliaceum, Panicum repens, Panicum texanum, Phalaris brachystachys, Phalaris canariensis, Phalaris minor, Roettboellia exaltata, Setaria faberi, Setaria italica, Setaria lutescens (=glauca), Setaria verticilliata, Setaria viridis, Setaria spec., Sorghum bicolor und Sorghum halepense bekämpft.

Besonders bevorzugt werden mit der Zusammensetzung Brachiaria brizantha, Brachiaria plantaginea, Brachiaria platyphylla, Brachiaria decumbens, Cenchrus echinatus, Cenchrus incertus, Digitaria adscendens, Digitaria ciliaris, Digitaria horizontalis, Digitaris ischaemum, Digitaria sanguinalis, Echinochloa colonum, Echinochloa crus-galli, Echinochloa crus-pavonis, Echinochloa spp., Eleusine indica, Eriochloa gracilis, Eriochloa villosa, Panicum capillare, Panicum dichotomiflorum, Panicum maximum, Panicum miliaceum, Panicum repens, Panicum texanum, Setaria faberi, Setaria italica, Setaria lutescens (=glauca), Setaria verticilliata, Setaria viridis, Setaria spec. und Sorghum bicolor bekämpft.

Die Zusammensetzung wirkt gegen Unkräuter wie Abutilon theophrasti, Acanthospermum australe, Acanthospermum hispidum, Aeschynomene indica, Aeschynomene virginica, Aeschynomene sensitiva, Alternanthera philoxeroides, Amaranthus retroflexus, Amaranthus rudis, Amaranthus tuberculatus, Amaranthus spp., Ambrosia artemisifolia, Ambrosia trifida, Anagallis arvensis, Anoda cristata, Anthemis arvensis, Aphanes arvensis, Atriplex patula, Atriplex hastata, Bidens pilosa, Capsella bursa-pastoris, Cassia obtusifolia, Cassia occidentalis, Cassia tora, Centaurea cyanus, Chenopodium album, Chenopodium hybridum, Chenopodium spp., Cirsium arvense, Convolvulus arvensis, Conyza canadensis, Datura stramonium, Daucus carota, Desmodium tortuosum, Euphorbia heterophylla, Euphorbia hirta, Galeopsis tetrahit, Galinsoga cilliata, Galinsoga parviflora, Helianthus annuus, Ipomoea acuminata, Ipomoea hederacea, Ipomoea lacunosa, Ipomonea purpurea, Ipomoea ssp., Kochia scoparia, Lamium amplexicaule, Lamium purpureum, Malva neglecta, Malva sylvestris, Matricaria chamomilla, Matricaria inodora, Mercurialis annua, Papaver rhoeas, Polygonum aviculare, Polygonum convolvulus, Polygonum lapathifolium, Polygonum persicaria, Portulaca oleracea, Richardia brasiliensis, Rumex spp., Salsola kali, Sesbania exaltata, Sida rhombifolia, Sida spinosa, Sinapis arvensis, Solanum nigrum, Solanum pthycanthum, Solanum spp., Sonchus arvensis, Sonchus oleraceae, Stellaria media, Tagetes minuta, Taraxacum officinale, Thlaspi arvense, Veronica hederaefolia, Veronica persica, Viola arvensis, Xanthium strumarium, Xanthium spinosum.

Bevorzugt werden mit der Zusammensetzung Abutilon theophrasti, Aeschynomene indica, Aeschynomene virginica, Aeschynomene sensitiva, Alternanthera philoxeroides, Amaranthus retroflexus, Amaranthus rudis, Amaranthus tuberculatus, Amaranthus spp., Ambrosia artemisifolia, Ambrosia trifida, Anoda cristata, Atriplex patula, Atriplex hastata, Bidens pilosa, Cassia obtusifolia, Cassia occidentalis, Cassia tora, Chenopodium album, Chenopodium hybridum, Chenopodium spp., Conyza canadensis, Datura stramonium, Daucus carota, Galeopsis tetrahit, Galinsoga cilliata, Galinsoga parviflora, Helianthus annuus, Ipomoea acuminata, Ipomoea hederacea, Ipomoea lacunosa, Ipomonea purpurea, Ipomoea ssp., Kochia scoparia, Malva neglecta, Mercurialis annua, Polygonum convolvulus, Polygonum lapathifolium, Polygonum persicaria, Portulaca oleracea, Richardia brasiliensis, Rumex spp., Salsola kali, Sesbania exaltata, Sida rhombifolia, Sida spinosa, Solanum nigrum, Solanum pthycanthum, Solanum spp., Sonchus arvensis, Sonchus oleraceae, Tagetes minuta, Xanthium strumarium und Xanthium spinosum bekämpft.

Besonders bevorzugt werden mit der Zusammensetzung Abutilon theophrasti, Amaranthus retroflexus, Amaranthus rudis, Amaranthus tuberculatus, Amaranthus spp., Ambrosia artemisifolia, Ambrosia trifida, Anoda cristata, Atriplex patula, Atriplex hastata, Bidens pilosa, Chenopodium album, Chenopodium hybridum, Chenopodium spp., Conyza canadensis, Datura stramonium, Galinsoga cilliata, Galinsoga parviflora, Helianthus annuus, Ipomoea acuminata, Ipomoea hederacea, Ipomoea lacunosa, Ipomonea purpurea, Ipomoea ssp., Kochia scoparia, Polygonum convolvulus, Polygonum lapathifolium, Polygonum persicaria, Portulaca oleracea, Richardia brasiliensis, Salsola kali, Sida spinosa, Solanum nigrum, Solanum pthycanthum, Solanum spp., Xanthium strumarium und Xanthium spinosum bekämpft.

In Abhängigkeit von der jeweiligen Applikationsmethode kann die erfindungsgemäß zu verwendende Zusammensetzung noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Avena satva, Beta vulgaris spec. altissima, Beta vulgaris spec. rapa, Brassica napus var. napus, Brassica napus var. napobrassica, Brassica rapa var. silvestris, Brassica nigra, Brassica oleracea, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Ribes sylvestre, Ricinus communis, Saccharum officinarum, Secale cereale, Sinapis albal, Solanum tuberosum, Sorghum bicolor (s. vulgare), Theobroma cacao, Trifolium pratense, Triticale, Triticum aestivum, Triticum durum, Vicia faba, Vitis vinifera und Zea mays.

Darüber hinaus kann die Zusammensetzung des erfindungsgemäßen Verfahrens auch in Kulturen, die durch Züchtung, einschließlich gentechnischer Methoden, gegen die Wirkung von Herbiziden tolerant sind, verwendet werden.

Die Applikation der Zusammensetzung des erfindungsgemäßen Verfahrens kann im Vorlauf- oder im Nachauflaufverfahren erfolgen. Ist die Zusammensetzung für gewisse Kulturpflanzen weniger verträglich, so können Ausbringungstechniken angewandt werden, bei welchen die Zusammensetzung mit Hilfe der Spritzgeräte so gespritzt werden, dass die Blätter der empfindlichen Kulturpflanzen nach Möglichkeit nicht getroffen werden, während die herbizide Zusammensetzung auf die Blätter darunter wachsender unerwünschter Pflanzen oder die unbedeckte Bodenfläche gelangen (post-directed, lay-by).

Außerdem kann es von Nutzen sein, die Zusammensetzung des erfindungsgemäßen Verfahrens allein oder in Kombination mit anderen Herbiziden auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden.

Zusammensetzungen des erfindungsgemäßen Verfahrens

### 1) Wasserlösliches Konzentrat der Verbindung der Formel I

Beispielsweise 100 g des Wirkstoffs 4-[2-Methyl-3-(4,5-dihydroisoxazol-3-yl)-4-methylsulfonyl-benzoyl]-1-methyl-5-hydroxy-1H-pyrazol (I-H; 99 % techn.), werden in Wasser (b), beispielsweise in ca. 300 ml dispergiert. Mit verdünnter Lauge, beispielsweise KOH, wird der Wirkstoff neutralisiert und die Zusammensetzung auf pH 8,5 eingestellt.

Anschließend wird gegebenenfalls Komponente d), beispielsweise 500 g AG 6202 eingerührt. Nach der Homogenisierung wird der pH-Wert noch einmal kontrolliert und eventuell korrigiert. Danach wird das Produkt auf 1 Liter aufgefüllt.

Gemäß der oben aufgeführten Vorschrift wurden folgende Zusammensetzungen hergestellt:
1.1 240 g/l 2-(2-Hydroxy-eth-1-oxy)eth-1-ylammonium-Salz
1.2 240 g/l Natrium-Salz
1.3 37.5 g/l Ammonium-Salz + Dünger c) 500 g/l Ensol 27%N + d) 500 g/l Lutensol ON 70
1.4 50 g/l Ammonium-Salz + Dünger c) 500 g/l Ensol 27%N + d) 500 g/l Lutensol ON 70
1.5 50 g/l Natrium-Salz + d) 500 g/l AG-6202
1.6 50 g/l Natrium-Salz + d) 500 g/l AG-6206
1.7 50 g/l Natrium-Salz + d) 500 g/l Emulan HE 50
1.8 50 g/l Natrium-Salz + d) 500 g/l Lutensol ON 70
1.9 50 g/l Natrium-Salz + d) 500 g/l Lutensol XP 70
1.10 50 g/l Natrium-Salz + d) 500 g/l MeO-(EO)₁₁-NH₂
1.11 50 g/l Natrium-Salz+ d) 500 g/l Pluriol A 11 RE
1.12 50 g/l Natrium-Salz + d) 500 g/l (Aziridin)₄₀-(EO)₂₈₀
1.13 50 g/l Natrium-Salz + d) 500 g/l Berol LFG 61
1.14 50 g/l Natrium-Salz + d) 500 g/l Genapol B
1.15 37,5 g/l Natrium-Salz + d) 500 g/l AG-6202
1.16 37,5 g/l Natrium-Salz + d) 500 g/l Emulan HE 50
1.17 37,5 g/l Natrium-Salz + d) 500 g/l Lutensol ON 70
1.18 37,5 g/l Natrium-Salz + d) 500 g/l Lutensol XP 70

Lutensol ON 70: iso-C₁₀-Oxoalkohol-(EO)₇-H (BASF)
AG-6202: Alkylglycosid (Akzo Nobel)
AG-6206: Alkylglycosid (Akzo-Nobel)
Emulan HE 50: Ethylenglycolmonohexylether (BASF)
Berol LFG 61: Mischung aus Alkylglycosid und Alkoholethoxylat (AkzoNobel)
Lutensol XP 70: Alkylpolyethylenglycolether (BASF)
Pluriol A 11 RE: Alkoxylate auf der Basis von Allyalkohol oder Butindiol (BASF)
Genapol B: Ethylendiamin EO-PO Blockpolymer (Clariant)

Komponente a), die Verbindungen der Formel I, in der Zusammensetzung wurden jeweils in situ aus der Verbindung 4-[2-Methyl-3-(4,5-dihydroisoxazol-3-yl)-4-methylsulfonyl-benzoyl]-1-methyl-5-hydroxy-1 H-pyrazol (I-H) durch die Zugabe von Lauge hergestellt; die Konzentrationsangabe in [g/l] bezieht sich auf den eingesetzten freien Wirkstoff.

### Anwendungsbeispiel

Die Wirkung des erfindungsgemäßen Verfahrens ließ sich durch Gewächshausversuche zeigen:
Als Kulturgefäße dienten Plastiktöpfe mit lehmigem Sand mit etwa 3,0 % Humus als Substrat. Die Samen der Testpflanzen wurden nach Arten getrennt eingesät.

Bei Vorauflaufbehandlung wurde die erfindungsgemäß zu verwendende Zusammensetzung direkt nach Einsaat mittels fein verteilender Düsen aufgebracht. Die Gefäße wurden leicht bewässert, um Keimung und Wachstum zu fördern und anschließend mit durchsichtigen Plastikhauben abgedeckt, bis die Pflanzen angewachsen waren. Diese Abdeckung bewirkt ein gleichmäßiges Keimen der Testpflanzen, sofern dies nicht durch die herbizide Zusammensetzung beeinträchtigt wird.

Zum Zweck der Nachauflaufbehandlung wurden die Testpflanzen je nach Wuchsform erst bis zu einer Wuchshöhe von 3 bis 15 cm angezogen und dann mit der herbiziden Zusammensetzung behandelt. Die Anzucht der Testpflanzen erfolgte entweder durch direkte Aussaat in die Versuchsgefäße oder durch Aussaat in Anzuchtschalen mit anschließender Verpflanzung der Testpflanzen in die Versuchsgefäße einige Tage vor der Behandlung.

Die Pflanzen wurden artenspezifisch bei Temperaturen von 10 - 25°C bzw. 20 - 35°C gehalten. Die Versuchsperiode erstreckte sich über 2 bis 4 Wochen. Während dieser Zeit wurden die Pflanzen gepflegt, und ihre Reaktion, auf die einzelnen Behandlungen wurde ausgewertet.

Die Wirkung auf die Testpflanzen wurde im direkten Vergleich zu unbehandelten Testpflanzen anhand einer Prozentskala (0 bis 100%) bewertet. Dabei bedeutet 100% kein Aufgang der Pflanzen bzw. völlige Zerstörung zumindest der oberirdischen Teile und 0% keine Schädigung oder normaler Wachstumsverlauf.

Die Zusammensetzung des erfindungsgemäßen Verfahrens enthaltend die in Wasser gelöste Verbindung der Formel I (SL-Formulierung) wurde im Vergleich zu einer die Verbindung der Formel I-H (freie Säure) in suspendierter Form enthaltenden Zusammensetzung (SC-Formulierung; Vergleichsbeispiel) auf ihre Wirksamkeit im Nachauflauf untersucht.

**Tabelle 1: Vergleich der Zusammensetzung (50 g/l Verbindung der Formel I, Na-Salz) mit einer entsprechenden SC-Formulierung (50 g/l Verbindung der Formel I-H, freie Säure); Wirksamkeit [%]**

| Zusammensetzung, Aufwandmenge Wirkstoff | SL 25 g/ha | SC (Vergleichsbeispiel) 25 g/ha |
|---|---|---|
| Zea mays | 0 | 0 |
| Brachiaria plantaginea | 90 | 80 |
| Panicum dichotomiflorum | 100 | 95 |
| Eriochloa villosa | 85 | 80 |
| Panicum miliaceum | 98 | 90 |
| Setaria viridis | 98 | 95 |
| Abutilon theophrasti * | 90 | 85 |

| | | |
|---|---|---|
| *) Vergleichsbeispiel, wird nicht von den Ansprüchen umfasst | | |

**Tabelle 2: Vergleich der Zusammensetzung (50 g/l Verbindung der Formel I, Na-Salz) mit einer entsprechenden SC-Formulierung (50 g/l Verbindung der Formel I-H, freie Säure), jeweils in Tankmischung mit SUN-IT II (methyliertes oder ethyliertes Pflanzenöl), welches in der Tankmischung in einer Endkonzentration von 0,625 Vol % vorlag; Wirksamkeit [%]**

| Zusammensetzung Aufwandmenge Wirkstoff | SL 25 g/ha + SUN-IT II | SC (Vergleichsbeispiel) 25 g/ha + SUN-IT II |
|---|---|---|
| Zea mays | 0 | 0 |
| Digitaria sanguinalis | 100 | 95 |
| Panicum maximum | 98 | 95 |

**Tabelle 3: Vergleich der Zusammensetzung 1.8 (50 g/l Verbindung der Formel I, Na-Salz + 500 g/l Lutensol ON70) mit einer entsprechenden SC-Formulierung (50 g/l Verbindung der Formel I-H, freie Säure + 400 g/l Lutensol ON70); Wirksamkeit [%]**

| Zusammensetzung Aufwandmenge Wirkstoff | SL 12,5 g/ha | SC (Vergleichsbeispiel) 12,5 g/ha |
|---|---|---|
| Zea mays | 0 | 0 |
| Echinochloa crus-galli | 85 | 80 |
| Setaria faberi | 95 | 90 |
| Setaria lutescens | 80 | 70 |
| Setaria viridis | 85 | 80 |
| Amaranthus retroflexus * | 98 | 95 |
| Xanthium strumarium * | 95 | 90 |

| | | |
|---|---|---|
| *) Vergleichsbeispiel, wird nicht von den Ansprüchen umfasst | | |

Die Beispiele belegen die verbesserte herbizide Wirksamkeit der Zusammensetzung des erfindungsgemäßen Verfahrens im Vergleich zu entsprechenden SC-Formulierungen.

## Patentansprüche

1. Verfahren zur Bekämpfung von Schadgräsern, **dadurch gekennzeichnet, dass** man eine herbizid wirksame Zusammensetzung, enthaltend eine in Wasser gelöste Verbindung der Formel I, 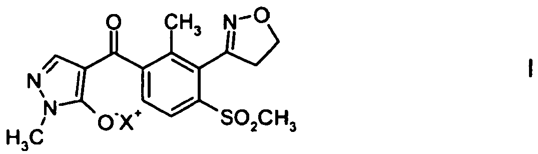 wobei X ein einwertiges Kation ist, ausgewählt aus der Gruppe von Alkalimetall- und Ammoniumionen, auf die Pflanzen und/oder deren Lebensraum einwirken lässt.

2. Verfahren nach Anspruch 1, **dadurch gekennzeichnet, dass** das einwertige Kation in der Verbindung der Formel I ein Alkaliion ausgewählt aus der Gruppe Li⁺, Na⁺ oder K⁺ ist.

3. Verfahren nach Anspruch 1, **dadurch gekennzeichnet, dass** das einwertige Kation in der Verbindung der Formel NR¹R²R³R⁴⁺ ist, wobei R¹, R², R³, R⁴ unabhängig voneinander ausgewählt sind aus der Gruppe Wasserstoff, C₁-C₄-Alkyl, oder 2-(2-Hydroxy-eth-1-oxy)eth-1-ylammonium.

4. Verfahren nach einem der Ansprüche 1 bis 3, **dadurch gekennzeichnet, dass** die Zusammensetzung zusätzlich mindestens einen stickstoffhaltigen Dünger c), ausgewählt aus der Gruppe wässrige Ammnoniaklösung, Ammoniumsalze, Harnstoff, Thioharnstoff und deren Mischungen enthält.

5. Verfahren nach einem der Ansprüche 1 bis 4, **dadurch gekennzeichnet, dass** die Zusammensetzung mindestens ein Adjuvant d) enthält.

6. Verfahren nach einem der Ansprüche 1 bis 5, **dadurch gekennzeichnet, dass** die Zusammensetzung mindestens ein weiteres Herbizid e) enthält.

7. Verfahren nach einem der Ansprüche 1 bis 6, **dadurch gekennzeichnet, dass** die Verbindung der Formel I in einer Konzentration von 0,005 [g/l] bis 500 [g/l] vorliegt.

8. Verfahren nach einem der Ansprüche 4 bis 7, **dadurch gekennzeichnet, dass** die Verbindung der Formel I und der stickstoffhaltige Dünger c) in einem Gewichtsverhältnis von 1:2,5 bis 1:10000 vorliegen.

9. Verfahren nach einem der Ansprüche 5 bis 8, **dadurch gekennzeichnet, dass** die Verbindung der Formel I und das Adjuvant d) in einem Gewichtsverhältnis von 1:2,5 bis 1:5000 vorliegen.

10. Verfahren nach einem der Ansprüche 6 bis 9, **dadurch gekennzeichnet, dass** die Verbindung der Formel I und das weitere Herbizid e) in einem Gewichtsverhältnis von 1:0,001 bis 1:1000 vorliegen.

11. Verwendung einer Zusammensetzung gemäß einem der Ansprüche 1 bis 10 zur Bekämpfung unerwünschten Pflanzenwuchses.

## Claims

1. A method of controlling grass weeds, which comprises allowing a herbicidally active composition comprising a water-dissolved compound of the formula I, 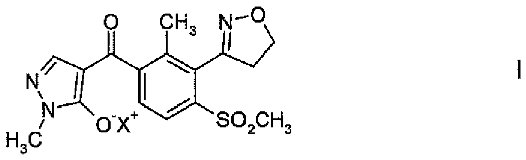 where X is a monovalent cation, selected from the group consisting of alkali metal and ammonium ions, to act on the plants and/or their environment.

2. The method according to claim 1, wherein the monovalent cation in the compound of the formula I is an alkali metal ion selected from the group consisting of Li⁺, Na⁺ or K⁺.

3. The method according to claim 1, wherein the monovalent cation in the compound of the formula I is NR¹R²R³R⁴⁺, where R¹, R², R³, R⁴ independently of one another are selected from the group consisting of hydrogen, C₁-C₄-alkyl or 2-(2-hydroxyeth-1-oxy)eth-1-ylammonium.

4. The method according to any of claims 1 to 3, wherein the composition additionally comprises at least one nitrogen-comprising fertilizer c), selected from the group consisting of aqueous ammonia solution, ammonium salts, urea, thiourea and their mixtures.

5. The method according to any of claims 1 to 4, wherein the composition comprises at least one adjuvant d).

6. The method according to any of claims 1 to 5, wherein the composition comprises at least one further herbicide e).

7. The method according to any of claims 1 to 6, wherein the compound of the formula I is present in a concentration of from 0.005 [g/l] to 500 [g/l].

8. The method according to any of claims 4 to 7, wherein the compound of the formula I and the nitrogen-comprising fertilizer c) are present in a weight ratio of from 1:2.5 to 1:10000.

9. The method according to any of claims 5 to 8, wherein the compound of the formula I and the adjuvant d) are present in a weight ratio of from 1:2.5 to 1:5000.

10. The method according to any of claims 6 to 9, wherein the compound of the formula I and the further herbicide e) are present in a weight ratio of from 1:0.001 to 1:1000.

11. The use of a composition according to any of claims 1 to 10 for controlling undesired vegetation.

## Revendications

1. Procédé pour la lutte contre des herbes nuisibles, **caractérisé en ce qu'**on fait agir sur les plantes et/ou leur habitat une composition à effet herbicide, contenant dissous dans de l'eau un composé de formule I, 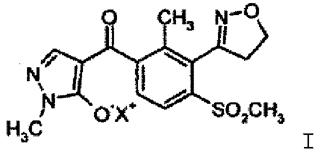 dans laquelle X est un cation monovalent, choisi dans le groupe des ions de métaux alcalins et ammonium.

2. Procédé selon la revendication 1, **caractérisé en ce que** le cation monovalent dans le composé de formule I est un ion d'un métal alcalin choisi dans le groupe constitué par Li⁺, Na⁺ et K⁺.

3. Procédé selon la revendication 1, **caractérisé en ce que** le cation monovalent dans le composé de formule I est NR¹R²R³R⁴⁺, R¹, R², R³, R⁴ étant choisis indépendamment les uns des autres dans le groupe constitué par un atome d'hydrogène, un groupe alkyle en C₁-C₄ et le groupe 2-(2-hydroxy-éth-1-oxy)éth-1-ylammonium.

4. Procédé selon l'une quelconque des revendications 1 à 3, **caractérisé en ce que** la composition contient en outre au moins un engrains azoté c), choisi dans le groupe constitué par une solution aqueuse d'ammoniac, des sels d'ammonium, l'urée, la thiourée et des mélanges de ceux-ci.

5. Procédé selon l'une quelconque des revendications 1 à 4, **caractérisé en ce que** la composition contient au moins un adjuvant d).

6. Procédé selon l'une quelconque des revendications 1 à 5, **caractérisé en ce que** la composition contient au moins un autre herbicide e).

7. Procédé selon l'une quelconque des revendications 1 à 6, **caractérisé en ce que** le composé de formule I est présent à une concentration de 0,005 [g/1] à 500 [g/1].

8. Procédé selon l'une quelconque des revendications 4 à 7, **caractérisé en ce que** le composé de formule I et l'engrais azoté c) sont présents en un rapport pondéral de 1:2,5 à 1:10000.

9. Procédé selon l'une quelconque des revendications 5 à 8, **caractérisé en ce que** le composé de formule I et l'adjuvant d) sont présents en un rapport pondéral de 1:2,5 à 1:5000.

10. Procédé selon l'une quelconque des revendications 6 à 9, **caractérisé en ce que** le composé de formule I et l'autre herbicide e) sont présents en un rapport pondéral de 1:0,001 à 1:1000.

11. Utilisation d'une composition selon l'une quelconque des revendications 1 à 10, pour la lutte contre une croissance de plantes indésirables.
